(19) Europäisches Patentamt / European Patent Office / Office européen des brevets

(11) **EP 2 520 555 A1**

(12) **EUROPEAN PATENT APPLICATION**
published in accordance with Art. 153(4) EPC

(43) Date of publication:
**07.11.2012 Bulletin 2012/45**

(21) Application number: **10840959.0**

(22) Date of filing: **24.12.2010**

(51) Int Cl.:
***C04B 35/48*** (2006.01)

(86) International application number:
**PCT/JP2010/073421**

(87) International publication number:
**WO 2011/081103 (07.07.2011 Gazette 2011/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 JP 2010238395**
**28.12.2009 JP 2009298653**

(71) Applicant: **Panasonic Corporation**
**Kadoma-shi**
**Osaka 571-8501 (JP)**

(72) Inventors:
• **KURIZOE, Naoki**
  **Osaka 540-6207 (JP)**
• **SUEHIRO, Yasuhiko**
  **Osaka 540-6207 (JP)**
• **NAKANISHI, Hideo**
  **Osaka 540-6207 (JP)**

(74) Representative: **Appelt, Christian W.**
**Boehmert & Boehmert**
**Pettenkoferstrasse 20-22**
**80336 München (DE)**

(54) **METHOD FOR PRODUCING ZIRCONIA-ALUMINA COMPOSITE CERAMIC MATERIAL, ZIRCONIA-ALUMINA COMPOSITE GRANULATED POWDER, AND ZIRCONIA BEADS**

(57) The present invention produces a zirconia-alumina composite ceramic material that exhibits an excellent wear resistance and hardness and that resists chipping at the particle edges. The zirconia-alumina composite ceramic material according to the present invention has a composite structure in which zirconia particles are dispersed in alumina particles and the alumina particles are dispersed in the zirconia particles. A first phase is formed of ceria-containing zirconia particles and a second phase is formed of alumina particles. An $\alpha$-alumina powder having an average particle size of at least 0.1 $\mu$m and a $\gamma$-alumina powder having an average particle size of 0.01 to 0.1 $\mu$m are used in a proportion of 85 : 15 to 65 : 35 as the mass ratio for the alumina powder for producing the alumina particles of the second phase.

*FIG. 1*

EP 2 520 555 A1

**Description**

TECHNICAL FIELD

The present invention relates to a method for producing a zirconia-alumina composite ceramic material that exhibits wear resistance, hardness, resistance to particle chipping, strength, and toughness. The present invention also relates to a zirconia-alumina composite granulated powder and to zirconia beads obtained using a zirconia-alumina composite granulated powder.

BACKGROUND ART

Ceramic materials exhibit better properties, e.g., a better hardness, wear resistance, heat resistance, and corrosion resistance, than metals and plastics. However, ceramic materials are used under severe conditions in a broad range of fields, e.g., for machinery components in automobiles, aircraft, and spacecraft, for cutting tools including drills and surgical scalpels, for medical devices, and for biomaterial components such as artificial joints and artificial teeth. The development of a ceramic material provided with a good balance between high levels of strength and toughness is therefore desired in support of practical implementation in these fields. Zirconia-alumina composite ceramic materials have been receiving attention as a strong candidate for such a ceramic material.

For example, a zirconia-based composite ceramic material has been introduced that is composed of a matrix phase formed of zirconia particles and a dispersed phase that is dispersed at the grain boundaries of the zirconia particles and within the zirconia particles (refer, for example, to Japanese Patent Application Publication No. H5-246760). The matrix phase in this example is formed by tetragonal zirconia particles that contain from 5 to 30 mol% ceria. The dispersed phase is formed by a finely divided particulate of at least one selected from alumina, silicon carbide, silicon nitride, and boron carbide. Because grain growth by the matrix phase is inhibited by the presence of this dispersed phase, a microstructure is obtained for the matrix phase and stabilization of the tetragonal zirconia is brought about and a reduction in the fracture origin size is achieved as a result.

A high-strength/high-toughness zirconia-based composite ceramic material has also been introduced that comprises a first phase formed of zirconia ($ZrO_2$) particles and a second phase formed of alumina ($Al_2O_3$) particles having an average particle size of not more than 2 $\mu$m (refer, for example, to Japanese Patent Application Publication No. H8-268775). The zirconia ($ZrO_2$) particles in this example are formed of partially stabilized zirconia ($ZrO_2$) particles that contain from 8 to 12 mol% ceria ($CeO_2$) and 0.05 to 4 mol% titania ($TiO_2$) and that have an average particle size of not more than 5 $\mu$m. The alumina content is 0.5 to 50 volume% with reference to the total amount of this zirconia-based composite ceramic material. In addition, the alumina particles are dispersed within the zirconia particles so as to provide a dispersion ratio - defined as the ratio of the number of alumina particles dispersed in the zirconia particles to the total number of alumina particles dispersed in the composite ceramic material - of 2% or more.

A mixture is used to obtain this composite ceramic material: this mixture is prepared using a first component for producing the partially stabilized zirconia containing ceria and titania in the previously described ranges and using a second component for producing the alumina that is the second phase. In addition, a powder compact is fabricated by molding the obtained mixture into a desired shape, and the composite ceramic material is obtained by sintering this powder compact at normal pressure in air. The co-use of ceria with titania as a zirconia stabilizer in this composite ceramic material results in a favorable promotion of zirconia grain growth and brings about the effective dispersion of a portion of the alumina particles within the zirconia particles and an increase in the critical stress for the stress-induced transformation from tetragonal crystals to monoclinic crystals.

Moreover, within the sphere of the application of composite ceramic materials as nanotechnology materials, there has been a sharp increase in demand for ceramic beads having even smaller particle sizes, i.e., an average particle size of less than 100 $\mu$m, in pursuit of the dispersion of ceramic materials with even finer particle sizes in nanotechnology materials (refer, for example to Japanese Patent Publication No. 2707528).

However, when the alumina particles in a ceramic material are a starting material that has a single particle size distribution, the sintering temperature for complete sintering will be low if the alumina particles have a small average particle size and there will be a decline in the particles composed of zirconia particles incorporated in an alumina particle. This decline in composite formation can bring about a deterioration in the balance between the toughness and mechanical strength of the ceramic material.

If, on the other hand, the alumina particles have a large average particle size, particles composed of zirconia particles incorporated in an alumina particle are in fact present, but the sintering temperature also tends to increase. A large crystal grain size is produced in the ceramic material (the sinter) when the sintering temperature is high, which results in the problem of a facile generation of chipping at the particle edges.

Accordingly, the practical implementation of ceramic materials in the broad range of applications indicated above will be further accelerated if, by adjusting the particle size of the alumina particles, a zirconia-alumina composite ceramic material could be provided that has an excellent wear resistance and hardness and is resistant to particle edge chipping.

In addition, rotational methods, pressing methods, granulation-in-liquid methods, and so forth are methods known for the production of beads of ceramic materials such as those described above; however, the production of microbeads by rotational methods and pressing methods is highly problematic. As a consequence, granulation-in-liquid methods that use, for example, water, as the bridging liquid and granulation-in-liquid methods that use water in combination with a liquid such as an alcohol have also been introduced as methods for producing beads that have a microfine average particle size. However, selectively controlling the particle size has been quite difficult in conventional granulation-in-liquid methods. Therefore, with regard to average particle size there is desire for a method that can more reliably form beads that have a microfine average particle size, i.e., less than 100 $\mu$m.

## DISCLOSURE OF THE INVENTION

The present invention was achieved in view of the points described above and has as an object the introduction of a method that, by adjusting the particle size of the alumina powder, produces a zirconia-alumina composite ceramic material that is provided with both a strength and toughness as good as or better than that up to now, that has an excellent wear resistance and hardness, and that is resistant to chipping at the particle edges.

Further objects of the present invention are to provide a zirconia-alumina composite granulated powder that is used for this zirconia-alumina composite ceramic material and to provide zirconia beads that have a smaller particle size than that up to now.

The method according to the present invention for producing a zirconia-alumina composite ceramic material is a method for producing a zirconia-alumina composite ceramic material that comprises a first phase formed of zirconia particles having an average particle size of 0.1 to 1 $\mu$m and a second phase formed of alumina particles having an average particle size of 0.1 to 0.5 $\mu$m, and that has a composite structure in which zirconia particles are dispersed in alumina particles and the alumina particles are dispersed in the zirconia particles. This first phase contains 10 to 12 mol% ceria as a stabilizer and is composed of 90 volume% and more of tetragonal zirconia. The method of the present invention for producing a zirconia-alumina composite ceramic material comprises a step of providing an $\alpha$-alumina powder that has an average particle size of at least 0.1 $\mu$m; a step of providing a $\gamma$-alumina powder that has an average particle size of 0.01 to 0.1 $\mu$m; a step of providing a second powder for producing the alumina particles of the second phase, by mixing the $\alpha$-alumina powder and the $\gamma$-alumina powder at a proportion of $\alpha$-alumina powder : $\gamma$-alumina powder of 85 : 15 to 65 : 35 as the mass ratio; a step of providing a first powder for producing the zirconia particles of the first phase; a step of mixing the first powder and the second powder; a step of producing a powder compact by molding the mixture of the first powder and the second powder into a desired shape; and a step of sintering the powder compact at a prescribed sintering temperature in an oxygen-containing atmosphere. The first powder here comprises a zirconia powder.

By using a plurality of alumina powders having different average particle sizes as the starting material for the alumina particles constituting the second phase, this production method can provide, due to the small particle size in the sinter, a zirconia-alumina composite ceramic material that is equipped with both a strength and toughness as good as or better than that up to now, that has an excellent wear resistance and hardness, and that is resistant to chipping at the particle edges.

In the aforementioned production method, the average particle size of the $\alpha$-alumina powder is preferably not more than 0.6 $\mu$m and the $\gamma$-alumina powder preferably has a spherical shape and a specific surface area of at least 10 $m^2g^{-1}$ but less than 100 $m^2g^{-1}$.

The mixture of the first powder and the second powder is preferably mixed with grinding when slurried so as to provide an average particle size of not more than 0.65 $\mu$m in the aforementioned production method.

The sintering temperature is preferably 1400 to 1450°C in the aforementioned production method.

The first phase preferably further contains 0.02 to 1 mol% titania in the aforementioned production method.

The first phase preferably further contains at least one selected from magnesia, calcia, titania, and yttria.

The first powder and the second powder are preferably mixed so as to provide a content of the second phase in the zirconia-alumina composite ceramic material of from 20 to 60 volume%.

The zirconia powder preferably has a specific surface area of from 10 to 20 $m^2g^{-1}$.

The zirconia-alumina composite granulated powder according to the present invention is a zirconia-alumina composite granulated powder obtained by granulating alumina particles and ceria-containing zirconia particles with a binder. The alumina particles here contain an $\alpha$-alumina powder having an average particle size of at least 0.1 $\mu$m and a $\gamma$-alumina powder having an average particle size of 0.01 to 0.1 $\mu$m at a proportion of $\alpha$-alumina powder : $\gamma$-alumina powder of 85 : 15 to 65 : 35 as the mass ratio.

A small particle size can be generated in the sinter by having the alumina particles for the zirconia-alumina composite granulated powder of the present invention contain a plurality of alumina powders having different average particle sizes. This makes it possible with the present invention to produce a zirconia-alumina composite ceramic material that is provided with both a strength and toughness as good as or better than that up to now, that has an excellent wear resistance and hardness, and that is resistant to chipping at the particle edges.

The $\alpha$-alumina powder for the composite granulated powder preferably has an average particle size of not more than 0.6 $\mu$m and the $\gamma$-alumina powder preferably has a spherical shape and a specific surface area of at least 10 $m^2g^{-1}$ but less than 100 $m^2g^{-1}$.

The zirconia beads are preferably obtained by sintering the composite granulated powder described above.

Because a small particle size is generated in the sinter by having the alumina particles for these zirconia beads contain a plurality of alumina powders having different average particle sizes, zirconia beads can be obtained that have both a strength and toughness as good as or better than that up to now, that have an excellent wear resistance and hardness, and that are resistant to chipping at the particle edges. Zirconia beads can be obtained here that have a small particle size and are useful for the media in, for example, bead mill grinding.

These zirconia beads preferably have an average particle size of at least 10 $\mu$m but less than 100 $\mu$m.

These zirconia beads preferably have a circularity of at least 70%.

These zirconia beads preferably have a compressive strength of at least 1000 MPa. These zirconia beads preferably also have a density of at least 5.0 $g/cm^3$.

Another production method of the present invention is a method for producing a zirconia-alumina composite ceramic material that is formed by the zirconia-alumina composite granulated powder. This zirconia-alumina composite ceramic material comprises a first phase formed of ceria-containing zirconia particles and a second phase formed of alumina particles, and has a composite structure in which zirconia particles are dispersed in alumina particles and the alumina particles are dispersed in the zirconia particles. This method for producing this zirconia-alumina composite ceramic material comprises a step of providing a first powder for producing the zirconia particles of the first phase; a step of providing a second powder for producing the alumina particles of the second phase; a step of mixing the first powder, the second powder, and a binder; a step of producing the zirconia-alumina composite granulated powder by granulating the mixture of the first powder, the second powder, and the binder; and a step of sintering the zirconia-alumina composite granulated powder at a prescribed sintering temperature in an oxygen-containing atmosphere. Here, the first powder contains a zirconia powder and the second powder contains an $\alpha$-alumina powder and a $\gamma$-alumina powder. This production method provides a small particle size in the sinter and makes it possible to obtain a microfine zirconia-alumina composite ceramic material. That is, this production method in particular makes it possible to obtain small-particle-size zirconia beads more reliably than in prior granulation-in-liquid methods.

The mixture of the first powder and the second powder is preferably mixed with grinding when slurried so as to provide an average particle size of not more than 0.65 $\mu$m in the aforementioned production method.

The sintering temperature is preferably 1400 to 1450°C in the aforementioned production method.

## BRIEF DESCRIPTION OF THE DRAWINGS

FIG. 1 is a scanning electron microscope (SEM) photograph that shows the composite structure of the zirconia-alumina composite ceramic material produced by the present invention;
FIG. 2 is an SEM photograph of the edge region in Examples 1 to 3 and Comparative Example 1;
FIG. 3A is an SEM photograph of the zirconia beads of Example 6A;
FIG. 3B is an SEM photograph of the zirconia beads of Example 6A;
FIG. 4A is an SEM photograph of the zirconia beads of Example 6B;
FIG. 4B is an SEM photograph of the zirconia beads of Example 6B;
FIG. 5A is an SEM photograph of the zirconia beads of Comparative Example 5; and
FIG. 5B is an SEM photograph of the zirconia beads of Comparative Example 5.

## BEST MODE FOR CARRYING OUT THE INVENTION

Modes for carrying out the present invention are described in detail in the following.

The zirconia-alumina composite ceramic material produced by the present invention is constituted by a first phase formed of zirconia particles and a second phase formed of alumina particles, and this first phase contains ceria as a stabilizer of tetragonal zirconia. The ceria content in the first phase is preferably in the range from 10 to 12 mol% with reference to the total amount of the first phase, and as a consequence of this the first phase is formed of 90 volume% or more (the upper limit is 100 volume%) tetragonal zirconia. For example, the first phase is preferably formed of 90 volume% or more tetragonal zirconia with the remainder being monoclinic zirconia. When the ceria content is less than 10 mol%, the monoclinic zirconia content undergoes a relative increase and the generation of cracking in the composite ceramic material becomes a risk. In addition, when the ceria content exceeds 12 mol%, cubic zirconia, which is the high temperature stable phase, begins to appear and the risk arises that it will not be possible to achieve a satisfactory improvement in the toughness and strength through stress-induced phase transformation from tetragonal zirconia to monoclinic zirconia.

Furthermore, the zirconia particles of the first phase preferably have an average particle size of 0.1 to 1 $\mu$m. An average particle size larger than 1 $\mu$m may cause a decline in the strength and wear resistance of the composite ceramic material. On the other hand, when the average particle size is less than 0.1 $\mu$m, it may then be quite difficult to obtain a satisfactorily dense composite material by sintering at normal pressure. The "average particle size" referenced in this Specification, unless specifically indicated otherwise, is the 50% average particle size determined using a laser diffraction particle size analyzer (for example, a SALD-2000 (trade name) laser diffraction particle size analyzer from Shimadzu Corporation).

In addition to ceria, the first phase may also contain another stabilizer such as magnesia, calcia, titania, and/or yttria. The use of 10 to 12 mol% ceria and 0.02 to 1 mol% titania with reference to the total amount of the first phase is particularly preferred for improving the mechanical properties of the composite ceramic material. In this case, a favorable promotion of grain growth by the first phase is brought about and dispersion of the alumina microparticles of the second phase within the zirconia particles, i.e., the first phase, is facilitated. The critical stress that produces stress-induced phase transformation can also be increased. The promotion of grain growth by the first phase may be inadequate when the amount of titania addition is less than 0.02 mol%. When, on the other hand, the amount of titania addition exceeds 1 mol%, abnormal grain growth by the first phase is then prone to occur, with the result that the strength and wear resistance of the composite ceramic material may be reduced. The first phase may also contain trace amounts of impurities. In such a case, the impurity content is desirably brought to 0.5 mol% or less with reference to the total amount of the first phase.

The alumina particles of the second phase in the zirconia-alumina composite ceramic material produced by the present invention preferably have an average particle size of 0.1 to 0.5 $\mu$m. When this average particle size exceeds 0.5 $\mu$m, it may then not be possible to disperse alumina particles in the first phase zirconia particles at a first dispersion ratio of at least 4%, vide infra. When, on the other hand, the average particle size is less than 0.1 $\mu$m, it may then be quite difficult to obtain a satisfactorily dense composite ceramic material by sintering at normal pressure.

The zirconia-alumina composite ceramic material produced by the present invention preferably contains from 20 to 60 volume% second phase with reference to the total amount of the zirconia-alumina composite ceramic material. A satisfactory improvement in the mechanical strength and wear resistance of the composite ceramic material may not be obtained when the second phase content is less than 20 volume%. On the other hand, a substantial decline in the strength and toughness may be produced when the second phase content exceeds 60 volume%. In particular, a composite ceramic material that strikes a balance between even higher strength and toughness levels can be provided when the zirconia-alumina composite ceramic material contains 25 to 40 volume% and more preferably 25 to 35 volume% second phase with reference to the total amount of the zirconia-alumina composite ceramic material.

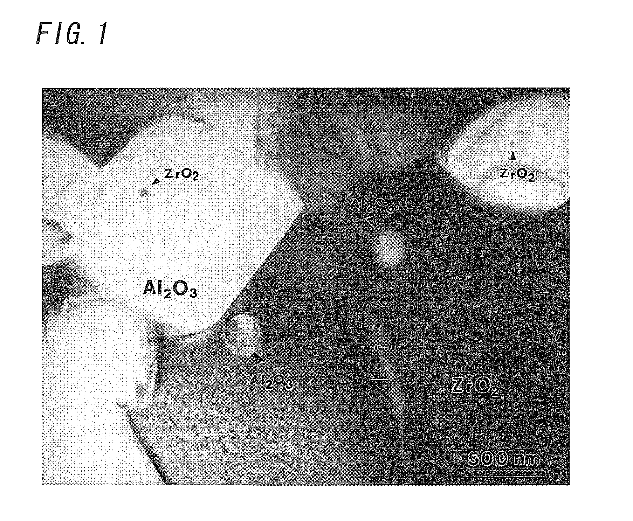

The zirconia-alumina composite ceramic material produced by the present invention preferably has a reciprocal nanocomposite structure. This reciprocal nanocomposite structure is formed such that microfine alumina particles with a size of several tens of nanometers are dispersed within zirconia particles and microfine zirconia particles with a size of several tens of nanometers are dispersed within alumina particles. A condition for this structure is that the second phase content is 20 to 60 volume% and preferably 25 to 40 volume%. The microfine alumina particles are dispersed in the zirconia particles at a first dispersion ratio of preferably 2% or more and more preferably 4% or more. This first dispersion ratio is the ratio of the number of alumina particles dispersed within zirconia particles to the total number of alumina particles dispersed in the composite ceramic material. The microfine zirconia particles are dispersed in the alumina particles at a second dispersion ratio of preferably 1% or more. This second dispersion ratio is the ratio of the number of zirconia particles dispersed within alumina particles to the total number of zirconia particles dispersed in the composite ceramic material. The composite structure of the zirconia-alumina composite ceramic material produced by the present invention is shown in FIG. 1.

The first and second dispersion ratios (W1, W2) can be determined by carrying out observation of the sinter with a transmission electron microscope (TEM) or by carrying out SEM observation on a sample obtained by polishing/ heat-treating the sinter. Thus, the following are counted: the total number of second phase particles present in the visual field (S1), the total number of first phase particles present in the same visual field (S2), the number of second phase particles present within first phase particles in the same visual field (n1), and the number of first phase particles present within second phase particles in the same visual field (n2). The first and second dispersion ratios can then be determined by substituting these values into the following expressions.

$$W1\ (\%) = (n1/S1) \times 100$$

$$W2 \; (\%) \; = \; (n2/S2) \; \times \; 100$$

A microparticulated structure can be obtained for the composite ceramic material through the formation of this reciprocal nanocomposite structure. Thus, for example, subgrain boundaries where dislocations are piled up are formed within the crystal grains by the microfine zirconia (or alumina) particles dispersed within the alumina particles (or zirconia particles). The strength and wear resistance of the composite ceramic material can be substantially improved as a result. When, in particular, the second phase content is in the range from 25 to 40 volume%, the second phase can be substantially strengthened by the formation of a zirconia-toughened alumina (ZTA) provided by the uniform dispersion of microfine tetragonal zirconia particles of the first phase within alumina particles of the second phase.

Conventional composite ceramic materials have a structure in which zirconia particles and alumina particles having average particle sizes of several microns are uniformly intermixed. When, in these instances, the alumina content exceeds 30 volume%, the stress-induced phase transformation from tetragonal zirconia to monoclinic zirconia is no longer an important mechanism for improving the toughness of the composite ceramic material and the strength and toughness gradually decline. Moreover, when the alumina content exceeds 50 volume%, this will mean that the matrix phase of the composite ceramic material will be composed of alumina, as a result of which the mechanical properties of the composite ceramic material may undergo a significant deterioration.

In contrast to the preceding, the composite ceramic material according to the present invention has the reciprocal nanocomposite structure described above. Due to this, even when the alumina content exceeds 50 volume%, a microparticulated structure is still formed and the crystal grains are effectively strengthened by the ultramicrofine zirconia particles (or alumina particles) dispersed within the alumina particles (or zirconia particles). The strength and toughness can thus be maintained at high levels in the present invention through this formation of a microparticulated structure and effective strengthening of the crystal grains.

That is, the mechanical characteristics of the composite ceramic material obtained according to the present invention are believed to be improved based on the following mechanism. A portion of the microfine alumina particles of the second phase is dispersed within the tetragonal zirconia particles of the first phase and a portion of the microfine tetragonal zirconia particles of the first phase is dispersed within the alumina particles of the second phase. When this occurs, due to the different thermal expansion coefficients exhibited by alumina and zirconia, a residual stress field is locally produced in the post-sintering cooling step at the circumference of the individual microfine particles dispersed within crystal grains. Dislocations are readily produced within the respective crystal grains due to the influence of this residual stress field. The dislocations pile up with each other and ultimately subgrain boundaries are formed within the crystal grains, i.e., within the zirconia particles and within the alumina particles. The subgrain boundaries bring about the microparticulated structure and function to increase the critical stress for the stress-induced phase transformation from tetragonal zirconia to monoclinic zirconia. As a result, the composite ceramic material according to the present invention develops a high strength and toughness as well as an excellent wear resistance and hardness.

When the first dispersion ratio and the second dispersion ratio are less than 2% and 1%, respectively, microparticulation of the structure by, e.g., the formation of subgrain boundaries, is inadequate, and it may then be quite difficult to prevent the decline in strength in the range of high alumina contents, i.e., 30 to 40%. If, in particular, the first dispersion ratio is at least 4%, a strength and toughness can be achieved that strike a balance at even higher levels. There are no particular limitations on the upper limit for the first dispersion ratio or the upper limit for the second dispersion ratio, and, for example, the upper limit on the first dispersion ratio may be 50% and the upper limit on the second dispersion ratio may be 30%. In theory, additional improvements in the mechanical characteristics of the composite ceramic material can be expected as the first dispersion ratio and the second dispersion ratio increase.

The zirconia-alumina composite ceramic material obtained according to the present invention, while retaining the strength and toughness of conventional zirconia-alumina composite ceramic materials, is well adapted for applications that demand the excellent wear resistance that can be expected due to the increased alumina content. For example, the composite ceramic material of the present invention is advantageously used for the artificial joint disclosed in WO 02/11780. Thus, the amount of polyethylene wear can be reduced when the joint portion of an artificial joint is provided by sliding contact between polyethylene and a composite ceramic material. In addition, an excellent wear resistance can be achieved when the joint portion of an artificial joint is provided by sliding contact between composite ceramic materials. The use of the composite ceramic material of the present invention in this manner makes it possible to obtain an artificial joint that can stably provide a smooth joint motion on a long-term basis under severe conditions.

The method of the present invention for producing the zirconia-alumina composite ceramic material is described in detail herebelow. Thus, this method comprises a step of producing a first powder for producing (providing) the first phase formed by zirconia particles and producing a second powder for producing (providing) the second phase formed by alumina particles. It also comprises a step of mixing the first powder with the second powder so as to provide a content of the second phase in this composite ceramic material in the range from 20 to 60 volume%, a step of molding the obtained mixed powder into a desired shape, and a step of sintering the obtained powder compact at a prescribed sintering temperature in an oxygen-containing atmosphere.

Or, the method of the present invention for producing the zirconia-alumina composite ceramic material comprises a step of mixing a first powder for producing (providing) the first phase formed by zirconia particles with a second powder for producing (providing) the second phase formed by alumina particles. It further comprises a step of granulating the obtained mixture to produce a zirconia-alumina composite granulated powder and a step of sintering this granulated powder at a prescribed sintering temperature under an oxygen-containing atmosphere.

The first powder is preferably produced so as to provide a ceria content in the first phase of the obtained composite ceramic material of 10 to 12 mol% and so as to provide a first phase composed of at least 90 volume% tetragonal zirconia. A tetragonal zirconia powder obtained by the solid dissolution of prescribed quantities of ceria and titania in the zirconia is preferably used as the first powder. There are no particular limitations on the method for producing the first powder, but the following method, for example, is recommended.

Thus, a cerium-containing compound, e.g., a cerium salt, is added to an aqueous solution of a zirconium salt. A titanium-containing compound, e.g., an aqueous solution of a titanium salt or an organic solution of a titanium alkoxide, may be added as necessary. A precipitate is then obtained by carrying out hydrolysis by adding an aqueous alkaline solution, e.g., aqueous ammonia, to the mixed solution prepared as described above. A tetragonal zirconia powder having a desired particle size distribution can be obtained by drying this precipitate, calcining it in air, and then grinding with, e.g., a wet ball mill.

When this tetragonal zirconia powder is used, this zirconia powder preferably has a specific surface area of 10 to 20 $m^2g^{-1}$. A powder compact or granulated powder having a satisfactory density is obtained in this case. Such a powder compact or granulated powder is easily sintered by sintering at normal pressure. When the specific surface area is less than 10 $m^2g^{-1}$, it may then be quite difficult to obtain a post-sintering first phase that has an average particle size of 1 $\mu$m or less. When, on the other hand, the specific surface area exceeds 20 $m^2g^{-1}$, the bulk density undergoes a substantial decline and handling of the first powder may then be quite problematic. Obtaining a sinter that has a satisfactory density by sintering at normal pressure is very problematic as a result.

The second powder is the starting material for the alumina particles of the second phase, and the second powder is prepared so as to produce the alumina particles of the second phase when the second powder is sintered. A mixture of an $\alpha$-alumina powder having an average particle size of at least 0.1 $\mu$m and a $\gamma$-alumina powder having an average particle size of 0.01 to 0.1 $\mu$m is used in the present invention as the second powder. In particular, the use is preferred of a mixture of an $\alpha$-alumina powder having an average particle size of 0.1 to 0.6 $\mu$m and a spherical $\gamma$-alumina powder having an average particle size of 0.01 to 0.1 $\mu$m and a specific surface area which has a range of 10 $m^2g^{-1}$ and more but less than 100 $m^2g^{-1}$. This offers the advantages - in comparison to the use of a bulky acicular $\gamma$-alumina having a specific surface area of 100 $m^2g^{-1}$ or more - of providing a better moldability and making it easier to control the average particle size of the second phase in the obtained composite ceramic material into the range from 0.1 to 0.5 $\mu$m. A reciprocal nanocomposite structure having elevated first and second dispersion ratios can also be obtained. Moreover, a second phase having a post-sintering average particle size of 0.5 $\mu$m or less can be obtained more easily than in the case of the use of a $\gamma$-alumina powder having a specific surface area less than 10 $m^2g^{-1}$. It may be quite difficult to obtain a second phase having a post-sintering average particle size of 0.5 $\mu$m or less when this specific surface area is less than 10 $m^2g^{-1}$.

There are no particular limitations on the method for producing the second powder, and, for example, a dry method, such as a laser ablation method or a plasma vapor-phase method, may be used. Alternatively, a precipitate may be obtained by carrying out hydrolysis by adding an aqueous alkaline solution, e.g., ammonia, to an aqueous solution of an aluminum salt and this precipitate may be dried, calcined in air, and ground with, e.g., a wet ball mill, to obtain a second powder having a desired particle size distribution. In addition, a mixture of a spherical $\gamma$-alumina powder having a specific surface area of 10 to 100 $m^2g^{-1}$ with an $\alpha$-alumina powder having an average particle size of not more than 0.3 $\mu$m is preferably used as the second powder. This has the advantage, in comparison to the use of only the aforementioned $\gamma$-alumina powder as the second powder, of facilitating the formation of a reciprocal nanocomposite structure for the composite ceramic material at a high first dispersion ratio and a high second dispersion ratio.

The mixing ratio of the $\alpha$-alumina powder with the $\gamma$-alumina powder in the second powder preferably provides a proportion of 85 : 15 to 65 : 35 as the mass ratio between the $\alpha$-alumina powder and $\gamma$-alumina powder ($\alpha$-alumina powder : $\gamma$-alumina powder). When the amount of $\gamma$-alumina powder blended with the $\alpha$-alumina powder is below this range, the proportion of $\gamma$-alumina particles that incorporate zirconia particles is reduced, which may reduce the composite formation effect. When, on the other hand, the amount of $\gamma$-alumina powder blended with the $\alpha$-alumina powder exceeds this range, the sinterability may be reduced since $\gamma$-alumina itself does not have a high sinterability and the dispersibility in the slurry may be reduced since it is a nanoparticle.

A slurry is prepared by blending the first powder and the second powder with a dispersing medium and the first powder and second powder are mixed in this slurry while grinding. A binder is more preferably added to this slurry. Thus, in this case, the first powder, second powder, and binder are mixed in the dispersing medium. Water or ethanol or a mixed medium thereof can be used as this dispersing medium. The mixing with grinding can be performed using, for example, a wet ball mill. An organic compound that exhibits binder properties can be used as the binder. In specific terms, for example, polyethylene glycol, a stearate salt, or polyvinyl alcohol can be used. In order to provide a good sinterability between the first powder and the second powder, the amount of binder addition is preferably 0.5 to 10.0 mass parts per 100 mass parts of the total of the first powder and the second powder.

The mixing ratio of the dispersing medium with the first and second powders and/or, for example, the grinding time and grinding method (device, type and amount of grinding media), are preferably established such that the slurry viscosity becomes not more than 1.5 mPa·s at 28°C. When the slurry viscosity is greater than 1.5 mPa·s, the dispersibility of the second powder in the slurry may be reduced and the dispersibility of the alumina particles in the sinter may be reduced, and it may then not be possible to improve the reliability of the strength. The lower limit for the slurry viscosity can be 1.0 mPa·s, but there is no limitation to this. In addition, when the particles are dried by a spray drying method, the slurry viscosity at 28°C is preferably brought to 100 to 1000 mPa·s.

The mixing with grinding is preferably carried out by grinding the first powder and second powder in the slurry so as to provide an average particle size of 0.65 μm or less. Doing this can eliminate the coarse particles and makes it possible to obtain a highly uniform sinter in which a better composite formation has occurred. Thus, a smaller particle size provides a more uniform dispersion of the zirconia and alumina particles and is more effective for raising the strength and density. When the average particle size of the first powder and second powder in the slurry is greater than 0.65 μm, the dispersibility of the second powder in the slurry may be reduced and the dispersibility of the alumina particles in the sinter may be reduced, and it may then not be possible to improve the reliability of the strength. The lower limit for the average particle size of the first powder and second powder in the slurry is not particularly specified, and it can be, for example, 0.1 μm. In this manner, the viscosity of a slurry that will be subjected to drying by spray drying can be raised by blending a γ-alumina having a small particle size and by grinding to a small particle size. As a consequence, a spherical granulated powder free of interior cavities can be obtained when drying is performed by spray drying.

The pH (hydrogen ion index) of the slurry is preferably brought to 9 to 10. A dispersing agent is also preferably added in order to improve the dispersibility of the first powder and second powder in the slurry. A dispersing agent in which the main component is a polycarboxylate salt, e.g., a poly(ammonium acrylate), can be used for this dispersing agent. The use of a dispersing agent having a pH of at least 8 is also preferred. A dispersing agent having a pH of not more than 11 can be used, but there is no limitation to this. In addition, the amount of dispersing agent addition is preferably greater than 0.34 mass% with reference to the total amount of the powder in the slurry (the total amount of the first powder and the second powder). The dispersibility of the powder may not be improved when the amount of dispersing agent addition is 0.34 mass% or less. While the upper limit on the amount of dispersing agent addition is not particularly limited, an addition in excess of 2 mass% may lower the moldability and reduce the strength of the sinter, and the amount of dispersing agent addition is therefore preferably less than or equal to 2 mass%. A component that also has a binder performance may be used as the dispersing agent.

A ground mixture of the first and second powders can be obtained by drying in order to remove the dispersing medium from the above-described slurry. Or, a zirconia-alumina composite granulated powder, in which the first and second powders are bonded by a binder, can be obtained by granulating the first powder and the second powder in the slurry using a binder and drying to remove the dispersing medium by a drying method such as spray drying. The addition of a binder is preferred because this improves particle shape retention post-drying and improves the post-granulation moldability. Moreover, spray drying is preferred because it provides excellent drying characteristics and can readily spheronize the particles. The particle size of the granulated powder may be classified by screening or sieving.

The ground mixture of the first and second powders is preferably calcined in an oxygen-containing atmosphere at a temperature of 800°C and more and at the temperature of less than the sintering temperature. In a preferred embodiment, calcination is followed by, for example, grinding by a wet ball milling procedure and a powder compact of the resulting calcined powder is sintered at a sintering temperature of 1400 to 1450°C in an oxygen-containing atmosphere. The execution of the calcination step makes it possible to obtain a molding having a satisfactory density and to consistently provide a composite ceramic material that has a high strength and toughness. This calcination step may be carried out as necessary, but may be omitted when it is unnecessary. Here, 1400 to 1450°C is the temperature at which sintering can occur, and the density can be increased and a completely densified and compacted article can be obtained by carrying out sintering at this temperature. Complete sintering is not achieved when the sintering temperature is lower than 1400°C, which risks the appearance of, for example, lower strength and toughness values. A large particle size occurs when the sintering temperature is higher than 1450°C, which risks the appearance of, for example, particle chipping and a reduction in the flexural strength.

Moreover, in the case of the zirconia-alumina composite granulated powder, a zirconia-alumina composite ceramic material can be produced by sintering the zirconia-alumina composite granulated powder, for example, at a sintering temperature of 1400 to 1450°C in an oxygen-containing atmosphere. Sintering at this temperature makes it possible to raise the density of the sinter and obtain a completely densified and compacted article. In this case, and as described above, the zirconia-alumina composite granulated powder may be calcined and a powder compact of the calcined powder may be prepared. Here, zirconia beads are obtained if the zirconia-alumina composite granulated powder is directly sintered as the powder.

After the sintering step, a hot isostatic pressing (HIP) treatment in an oxygen-containing atmosphere may be carried out. In order to obtain the maximum effect from this HIP treatment, the sinter of the composite ceramic material preferably has a relative density of at least 95% after the sintering step. There are no particular limitations on the oxygen content in the oxygen atmosphere during the sintering step. A mixed gas of oxygen gas with an inert gas, e.g., argon, may also be used. In such a case, the oxygen concentration is preferably at least approximately 5 volume% with reference to the total amount of the mixed gas.

Since the aforementioned zirconia-alumina composite granulated powder is a spherical granulated powder, it can be densely packed into a mold and can thus provide an improved strength for the molding. In addition, high-hardness spherical zirconia beads can be obtained by sintering the granulated powder. Thus, zirconia beads with a small particle size can be more reliably obtained from the aforementioned zirconia-alumina composite granulated powder than by conventional granulation-in-liquid methods. In addition, the moldability is better when the specific surface area of the $\gamma$-alumina powder is below 100 $m^2g^{-1}$ than when a bulky acicular $\gamma$-alumina powder having a specific surface area of 100 $m^2g^{-1}$ or more is used. Moreover, an advantage to the former case is that the average particle size of the second phase in the composite ceramic material can be easily controlled into the range of 0.1 to 0.5 $\mu$m. A reciprocal nanocomposite structure with elevated first and second dispersion ratios can also be obtained. Furthermore, when the specific surface area of the $\gamma$-alumina powder is at least 10 $m^2g^{-1}$, a second phase having a post-sintering average particle size of 0.5 $\mu$m or less can be more easily obtained than when a $\gamma$-alumina powder having a specific surface area of less than 10 $m^2g^{-1}$ is used.

The zirconia beads of the present invention are one specific embodiment of the zirconia-alumina composite ceramic material and are obtained by sintering the previously described zirconia-alumina composite granulated powder. Thus, the granulated powder is a precursor for the beads, and it is thought that the shape at the time of granulation then directly becomes the bead shape. Moreover, the zirconia beads obtained proceeding this manner, because they are spherical zirconia beads having a small particle size, can provide fine grinding when used for, for example, the media in bead mill grinding, and are thus useful. The particle size of the zirconia beads can be adjusted or trimmed by classification by a classification procedure such as sieving or screening. This makes it possible to obtain zirconia beads having a uniform particle size.

The average particle size of the zirconia beads is preferably the range of 10 $\mu$m and more and less than 100 $\mu$m. This is because microfine beads having an average particle size $\phi$ of less than 100 $\mu$m are effective when the zirconia beads of the present invention are used for bead milling and the objective is to microfine-size the powder to primary particles of nanometer size. The average particle size can be measured by embedding the particles in a resin, sectioning this, polishing the cross section, and carrying out SEM observation. For example, a scanning electron microscope from the JASCO Corporation can be used for the SEM. The image data obtained from the SEM can be analyzed by image analysis software in order to calculate, for example, the particle size. For example, "A Zo Kun" image analysis software from Asahi Kasei Engineering Corporation can be used for the image analysis software.

It is preferably that the circularity of the zirconia beads is 80% and more, and more preferably that the circularity of the zirconia beads is 90% and more. A more perfectly spherical shape results in the generation of less wear and fracture of the zirconia during milling or grinding operations. The upper limit on the circularity is 100%. The circularity can be determined by subjecting the image data obtained from the SEM to analysis with image analysis software.

The compressive strength of the zirconia beads is preferably at least 1000 MPa. A high compressive strength makes it possible to carry out bead mill grinding at higher rotation rates and to shorten the treatment speed. Measurement of the compressive strength is performed, for example, using an Autograph (Shimadzu Corporation) and measuring the size of the obtained particles using a micrometer. The compressive strength (MPa) can be calculated from the following expression.

```
compressive strength (MPa) = load (kgf)/cross-sectional

area (mm²)
```

There are no particular limitations on the upper limit on the compressive strength, but the upper limit can be, for example, 3000 MPa, which is the measurement limit.

The density of the zirconia beads is preferably at least 5.0 $g/cm^3$. A high density reduces the potential for voids and cracks to appear in the interior and also inhibits the appearance of wear and inhibits strength deterioration. A high specific gravity can also raise the grinding efficiency in bead milling because it provides a large collision energy during grinding. The density can be measured by the Archimedes method. The upper limit on the zirconia bead density can be, for example, 5.8 $g/cm^3$.

EXAMPLES

The present invention is described more specifically by the examples provided below.

(Examples 1 to 5 and Comparative Examples 1 to 4)

A tetragonal zirconia powder having a specific surface area of 15 $m^2g^{-1}$ and containing 12 mol% ceria and 0.04 mol% titania as stabilizers was used as the first powder for providing the first phase formed of zirconia particles.

A mixture of an $\alpha$-alumina powder having an average particle size of 0.1 $\mu$m and a spherical $\gamma$-alumina powder having a specific surface area of 55 $m^2g^{-1}$ and an average particle size of 0.03 $\mu$m and produced by a vapor-phase method (laser ablation) was used as the second powder for providing the second phase formed of alumina particles.

These first and second powders were mixed; 100 volume parts water was added per 100 volume parts of this mixture to prepare a slurry; and the first and second powders in this slurry were mixed and ground. The average particle size was determined by measuring the particle size distribution of the first and second powders in the obtained slurry using a SALD2000 (laser diffraction procedure) from Shimadzu Corporation. A mixed powder of the first and second powders was then obtained by drying the slurry.

The obtained mixed powder was subjected to uniaxial press molding at a pressure of 10 MPa to produce a disk-shaped molding with $\phi$ 68 mm. The resulting molding was treated by cold isostatic pressing (CIP) at a pressure of 180 MPa to prepare a powder compact. The powder compact was thereafter sintered at normal pressure in air for 2 hours at a sintering temperature of 1400 to 1450°C to obtain a zirconia-alumina composite ceramic material sinter.

The density of the resulting sinter was measured by the Archimedes method based in JIS R 1634.

In order to evaluate the mechanical properties of the sinter, a 4 mm $\times$ 3 mm $\times$ 40 mm test specimen was fabricated from the sinter and the three-point bending strength of this test specimen was measured (based on JIS R1601: 2008).

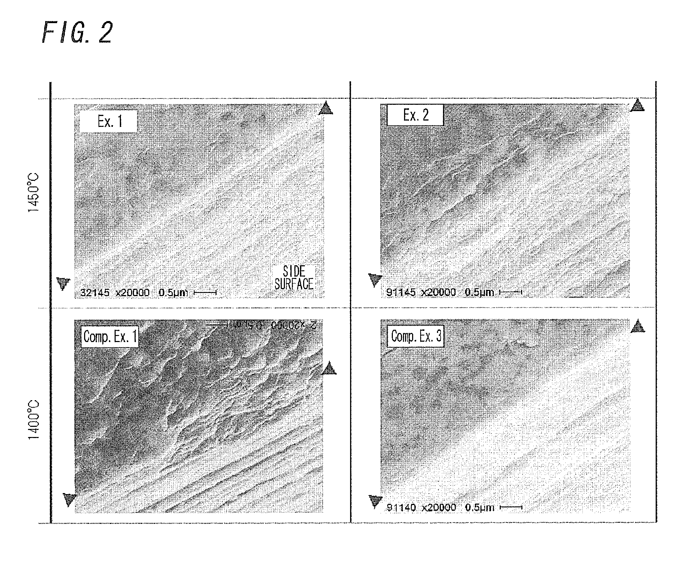

The "particle chipping" was evaluated by fabricating a 45° acute angle corner in the sinter described above and observing this section with a scanning electron microscope (SEM). SEM photographs for individual examples and a comparative example are shown in FIG. 2. An $\times$ was assigned when a large amount of particle chipping was present; a $\bigcirc$ was assigned when particle chipping occurred in some portions; and a $\bigcirc\bigcirc$ was assigned when almost no particle chipping was present.

The results are given in Table 1.

For each of the sinters obtained according to Examples 1 to 5 and Comparative Examples 1 to 4, the relative density was at least 99%, and the first phase in each sinter was confirmed by x-ray diffraction to be formed of 90 volume% or more tetragonal zirconia and comprised monoclinic zirconia as the remainder. The sinters were also observed with a scanning electron microscope (SEM) and transmission electron microscope (TEM). Based on these observations, it was confirmed that the sinters of Examples 1 to 5 and Comparative Examples 1 to 4 had been formed with microfine alumina particles of the second phase dispersed within zirconia particles of the first phase and with microfine zirconia particles of the first phase dispersed within alumina particles of the second phase. These sinters were thus confirmed to have reciprocal nanocomposite structures.

[Table 1]

| | | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|
| first phase (zirconia particles) | stabilizer (ceria) content (mol%) | 12 | | | | | | | | |
| | content of tetragonal zirconia powder (volume%) | 100 | | | | | | | | |
| | average particle size ($\mu$m) | 0.3 to 0.5 | | | | | | | | |
| | amount of first powder addition (mass parts) | 70 | | | | | | | | |

(continued)

|  |  |  | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|---|
| second phase (alumina particles) |  | average particle size ($\mu$m) | 0.1 to 0.3 | | | | | | | | |
|  |  | amount of second powder addition (mass parts) | 100 | | | | | | | | |
|  | $\alpha$-alumina powder | average particle size ($\mu$m) | 0.1 | | | | | | | | |
|  |  | amount of addition (mass parts) | 70 | | | 85 | 65 | 100 | 95 | 90 | 60 |
|  | $\gamma$-alumina powder | average particle size ($\mu$m) | 0.03 | | | | | | | | |
|  |  | specific surface area ($m^2g^{-1}$) | 55 | | | | | | | | |
|  |  | amount of addition (mass parts) | 30 | | | 15 | 35 | 0 | 5 | 10 | 40 |
|  | amount of addition of the $\gamma$-alumina powder with reference to the $\alpha$-alumina powder (mass%) | | 42.9 | | | 17.6 | 53.8 | 0 | 5.3 | 11.1 | 66.7 |
|  | average particle size for the slurry ($\mu$m) | | 0.65 | 0.53 | | 0.65 | 0.65 | 0.67 | 0.68 | 0.66 | 0.65 |
| sintering temperature (°C) | | | 1450 | | 1400 | 1450 | 1450 | 1450 | | | |
| density | | | 5.51 | 5.57 | 5.55 | 5.55 | 5.54 | 5.55 | 5.50 | 5.51 | 5.49 |
| three-point bending strength (MPa) | | | 980 | 1008 | 904 | 1028 | 1072 | 901 | 901 | 927 | 753 |
| particle chipping | | | ○ | ○ | ○○ | ○ | ○ | × | × | × | × |

As is clear from Table 1, the sinters in Examples 1 to 5, due to the incorporation of at least 40 mass% of the $\gamma$-alumina powder with reference to the $\alpha$-alumina powder as described above, exhibit little particle chipping and tend to have an increased three-point bending strength. In particular, almost no particle chipping was seen in Example 3 because the average particle size of the mixture of powders 1 and 2 when slurried was smaller than in Examples 1 and 2 and the sintering temperature was lower than in Examples 1 and 2, and a sinter having an excellent wear resistance was thus obtained. On the other hand, no increase in the three-point bending strength was seen - while particle chipping was also produced - in the case of the sinters in Comparative Examples 1 to 4 because the sinter either incorporated no γ-alumina powder or incorporated too little or too much.

(Example 6)

A tetragonal zirconia powder having a specific surface area of 15 m$^2$g$^{-1}$ and containing 12 mol% ceria and 0.04 mol% titania as stabilizers was used as the first powder for providing the first phase formed of zirconia particles. The tetragonal zirconia powder content was 100 volume%, and the average particle size was in the range from 0.3 to 0.5 μm.

A mixture of an α-alumina powder having an average particle size of 0.1 μm and a spherical γ-alumina powder having a specific surface area of 55 m$^2$g$^{-1}$ and an average particle size of 0.03 μm and produced by a vapor-phase method (laser ablation) was used as the second powder for providing the second phase formed of alumina particles. The α-alumina powder : γ-alumina powder proportion in the second powder was 70 : 30 as the mass ratio. Thus, the content of the γ-alumina powder with reference to the α-alumina powder was 42.9 mass%. The average particle size of the second powder was in the range from 0.1 to 0.3 μm.

This first powder and second powder were mixed at a volume ratio of 70 : 100; 5.0 mass parts ethylene glycol was added as a binder per 100 mass parts of the total of the first powder and second powder; and this was mixed. A slurry was prepared by adding 100 volume parts water per 100 volume parts of the resulting mixture, and the first and second powders in this slurry were mixed and ground. The average particle size was determined by measuring the particle size distribution of the first and second powders in the obtained slurry using a SALD2000 (laser diffraction procedure) from Shimadzu Corporation. The average particle size of the slurry was the same as in Example 1.

The slurry was then dried by spray drying to obtain a zirconia-alumina composite granulated powder in which the first powder and second powder were granulated by the binder. The obtained powder had a spherical shape. Large voids, fissures, cracks and so forth were not seen when the cross section of this granulated powder was examined.

The obtained granulated powder was sintered for 2 hours at 1450°C using a Super-Burn from Kabushiki Kaisha Motoyama.

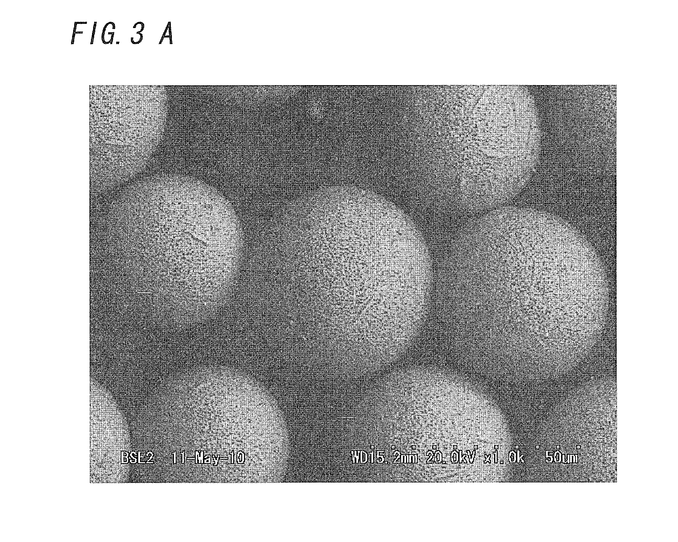

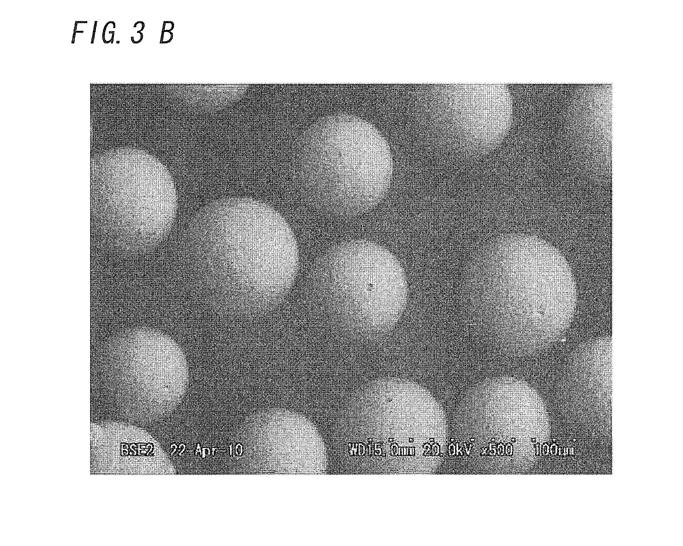

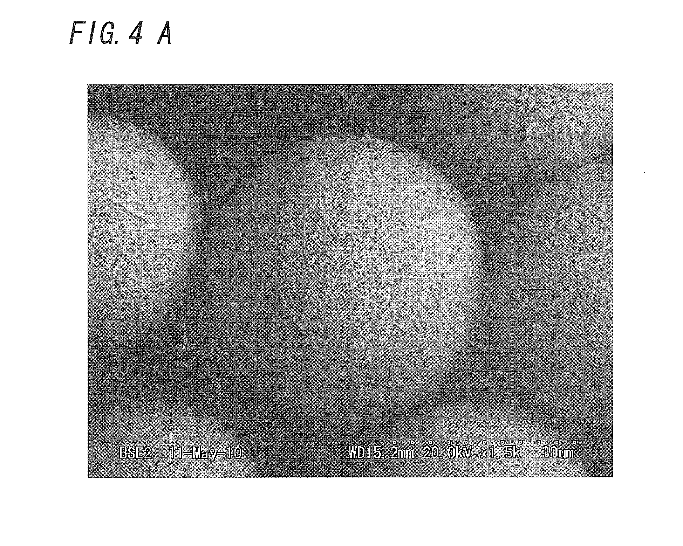

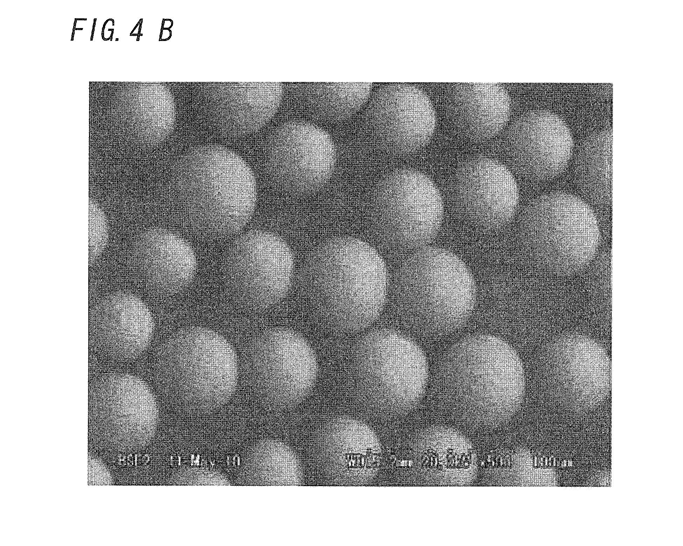

After sintering, the particles were classified by sieving. SEM photographs are given in FIGS. 3A and 3B of the zirconia beads (as Example 6A) separated by the 63 μm and 45 μm sieves. FIG. 3A is a photograph enlarged 1000 times and FIG. 3B is a photograph enlarged 500 times. SEM photographs are given in FIGS. 4A and 4B of the zirconia beads (as Example 6B) separated by the 45 μm and 32 μm sieves. FIG. 4A is a photograph enlarged 1500 times and FIG. 4B is a photograph enlarged 500 times.

The cross sections of the particles in Example 6A were observed by SEM and analysis was carried out with "A Zo Kun" image analysis software; the results, as shown in Table 2, were an average particle size of 32 μm, a circularity of 95%, and a compressive strength of 1050 MPa. The density, measured based on the Archimedes method (JIS R 1634), was 5.50 g/cm$^3$. The obtained zirconia bead powder had a spherical shape, and large voids, fissures, cracks and so forth were not seen when the cross sections of these zirconia beads were examined. Particle chipping was also not seen.

It was thus confirmed that spherical zirconia beads according to the present invention had been obtained.

(Comparative Example 5)

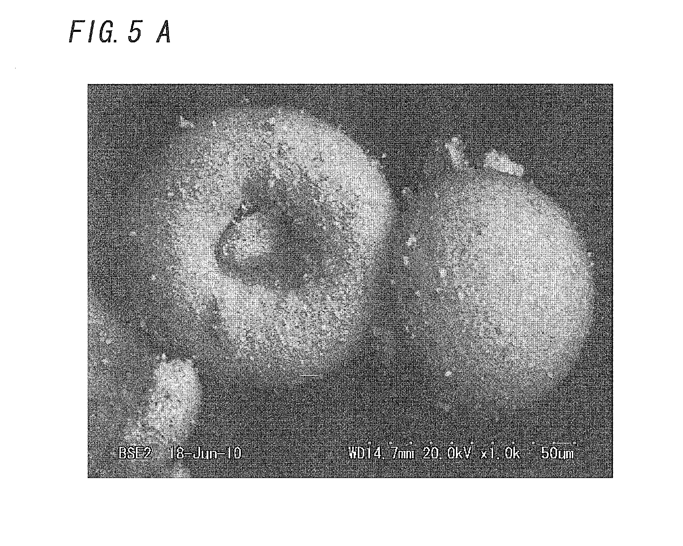

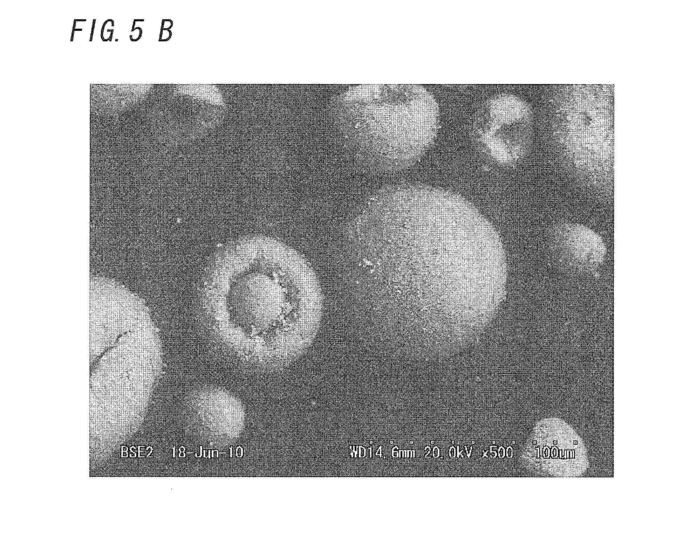

Zirconia beads were produced proceeding as in Example 6, but in this case changing the Example 6 blending ratio between the α-alumina powder and γ-alumina powder to that shown in Table 2. SEM photographs of the zirconia beads according to Comparative Example 5 are given in FIGS. 5A and 5B. FIG. 5A is a photograph enlarged 1000 times and FIG. 5B is a photograph enlarged 500 times. It was found that the granulated powder did not become a spherical particle in Comparative Example 5 and ultimately assumed a doughnut shape.

[Table 2]

|  |  | Ex. 6 | Comp. Ex. 5 |
|---|---|---|---|
| first phase (zirconia particles) | stabilizer (ceria) content (mol%) | 12 | |
| | content of tetragonal zirconia powder (volume%) | 100 | |
| | average particle size (μm) | 0.3 to 0.5 | |
| | amount of first powder addition (mass parts) | 70 | |

**EP 2 520 555 A1**

(continued)

| | | | Ex. 6 | Comp. Ex. 5 |
|---|---|---|---|---|
| second phase (alumina particles) | average particle size (μm) | | 0.1 to 0.3 | |
| | amount of second powder addition (mass parts) | | 100 | |
| | α-alumina powder | average particle size (μm) | 0.1 | |
| | | amount of addition (mass parts) | 70 | 100 |
| | γ-alumina powder | average particle size (μm) | 0.03 | |
| | | specific surface area (m$^2$g$^{-1}$) | 55 | |
| | | amount of addition (mass parts) | 30 | 0 |
| | amount of addition of the γ-alumina powder with reference to the α-alumina powder (mass%) | | 42.9 | 0 |
| | average particle size for the slurry (μm) | | 0.65 | |
| sintering temperature (°C) | | | 1450 | |
| average particle size (μm) | | | 32 | 76 |
| circularity (%) | | | 95 | 33 |
| compressive strength (MPa) | | | 1050 | not done |

**Claims**

1. A method for producing a zirconia-alumina composite ceramic material comprising a first phase formed of zirconia particles that have an average particle size of 0.1 to 1 μm and a second phase formed of alumina particles that have an average particle size of 0.1 to 0.5 μm, and having a composite structure in which zirconia particles are dispersed in alumina particles and the alumina particles are dispersed in the zirconia particles,
   the first phase containing 10 to 12 mol% ceria as a stabilizer and being composed of 90 volume% and more of tetragonal zirconia,
   the method for producing a zirconia-alumina composite ceramic material comprising:

   a step of providing an α-alumina powder that has an average particle size of at least 0.1 μm;
   a step of providing a γ-alumina powder that has an average particle size of 0.01 to 0.1 μm;
   a step of providing a second powder for producing the alumina particles of the second phase, by mixing the α-alumina powder and the γ-alumina powder at a proportion of α-alumina powder : γ-alumina powder of 85 : 15 to 65 : 35 as the mass ratio;
   a step of providing a first powder for producing the zirconia particles of the first phase, this first powder containing a zirconia powder;
   a step of mixing the first powder and the second powder;
   a step of producing a powder compact by molding the mixture of the first powder and the second powder into a desired shape; and
   a step of sintering the powder compact at a prescribed sintering temperature in an oxygen-containing atmosphere.

2. The method for producing a zirconia-alumina composite ceramic material according to claim 1, wherein the average particle size of the α-alumina powder is not more than 0.6 μm and the γ-alumina powder has a spherical shape and a specific surface area of at least 10 m$^2$g$^{-1}$ but less than 100 m$^2$g$^{-1}$.

3. The method for producing a zirconia-alumina composite ceramic material according to claim 1 or 2, wherein the mixture of the first powder and the second powder is mixed with grinding when slurried so as to provide an average particle size of not more than 0.65 μm.

4. The method for producing a zirconia-alumina composite ceramic material according to any one of claims 1 to 3, wherein the sintering temperature is 1400 to 1450°C.

5. The method for producing a zirconia-alumina composite ceramic material according to any one of claims 1 to 4, wherein the first phase further contains 0.02 to 1 mol% titania.

6. The method for producing a zirconia-alumina composite ceramic material according to any one of claims 1 to 5, wherein the first phase further contains at least one selected from magnesia, calcia, titania, and yttria.

7. The method for producing a zirconia-alumina composite ceramic material according to any one of claims 1 to 6, wherein the first powder and the second powder are mixed so as to provide a content of the second phase in the zirconia-alumina composite ceramic material of from 20 to 60 volume%.

8. The method for producing a zirconia-alumina composite ceramic material according to any one of claims 1 to 7, wherein the zirconia powder has a specific surface area of from 10 to 20 $m^2g^{-1}$.

9. A zirconia-alumina composite granulated powder obtained by granulating alumina particles and ceria-containing zirconia particles with a binder,
wherein the alumina particles contain an $\alpha$-alumina powder having an average particle size of at least 0.1 $\mu$m and a $\gamma$-alumina powder having an average particle size of 0.01 to 0.1 $\mu$m at a proportion of $\alpha$-alumina powder : $\gamma$-alumina powder of 85 : 15 to 65 : 35 as the mass ratio.

10. The zirconia-alumina composite granulated powder according to claim 9, wherein the average particle size of the $\alpha$-alumina powder is not more than 0.6 $\mu$m and the $\gamma$-alumina powder has a spherical shape and a specific surface area of at least 10 $m^2g^{-1}$ but less than 100 $m^2g^{-1}$.

11. Zirconia beads obtained by sintering the zirconia-alumina composite granulated powder according to claim 9 or 10.

12. The zirconia beads according to claim 11, that have an average particle size of at least 10 $\mu$m but less than 100 $\mu$m.

13. The zirconia beads according to claim 11 or 12, that have a circularity of at least 70%.

14. The zirconia beads according to any one of claims 11 to 13, that have a compressive strength of at least 1000 MPa.

15. The zirconia beads according to any one of claims 11 to 14, that have a density of at least 5.0 $g/cm^3$.

16. A method for producing a zirconia-alumina composite ceramic material that is formed by the zirconia-alumina composite granulated powder according to claim 9 or 10,
the zirconia-alumina composite ceramic material containing a first phase formed of ceria-containing zirconia particles and a second phase formed of alumina particles, and having a composite structure in which zirconia particles are dispersed in alumina particles and the alumina particles are dispersed in the zirconia particles,
the method for producing a zirconia-alumina composite ceramic material comprising:

a step of providing a first powder for producing the zirconia particles of the first phase, this first powder containing a zirconia powder;
a step of providing a second powder for producing the alumina particles of the second phase, this second powder containing an $\alpha$-alumina powder and a $\gamma$-alumina powder;
a step of mixing the first powder, the second powder, and a binder;
a step of producing the zirconia-alumina composite granulated powder by granulating the mixture of the first powder, the second powder, and the binder; and
a step of sintering the zirconia-alumina composite granulated powder at a prescribed sintering temperature in an oxygen-containing atmosphere.

17. The method for producing a zirconia-alumina composite ceramic material according to claim 16, wherein the mixture of the first powder and the second powder is mixed with grinding when slurried so as to provide an average particle size of not more than 0.65 $\mu$m.

18. The method for producing a zirconia-alumina composite ceramic material according to claim 16 or 17, wherein the sintering temperature is 1400 to 1450°C.

*FIG. 1*

FIG. 2

FIG. 3 A

FIG. 3 B

FIG. 4 A

BSE2 11-May-10 WD15.2mm 20.0kV x1.5k 30um

FIG. 4 B

FIG. 5 A

FIG. 5 B

<div align="center">

**INTERNATIONAL SEARCH REPORT**

</div>

| | International application No. |
|---|---|
| | PCT/JP2010/073421 |

**A. CLASSIFICATION OF SUBJECT MATTER**
*C04B35/48*(2006.01)i

According to International Patent Classification (IPC) or to both national classification and IPC

**B. FIELDS SEARCHED**

Minimum documentation searched (classification system followed by classification symbols)
C04B35/48

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-51481 A  (Matsushita Electric Works, Ltd.), 19 February 2004 (19.02.2004), claims; paragraphs [0034], [0035], [0063], [0065], [0072]; table 7 & US 2004/0067839 A1    & EP 1382586 A2 & CN 1480426 A | 1-18 |
| Y | WO 2002/011780 A1  (Matsushita Electric Works, Ltd.), 14 February 2002 (14.02.2002), claims; page 15, lines 18 to 21 & US 2002/0198602 A1    & EP 1228774 A1 & DE 60110197 D        & TW 537907 B & CN 1386067 A | 1-18 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 March, 2011 (14.03.11) | 05 April, 2011 (05.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

<div align="center">

**INTERNATIONAL SEARCH REPORT**

</div>

| | International application No. |
|---|---|
| | PCT/JP2010/073421 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2004-338998 A  (Niimi Sangyo Co., Ltd.),<br>02 December 2004 (02.12.2004),<br>claims; paragraphs [0002], [0013] to [0015]<br>(Family: none) | 11-15 |
| A | JP 2005-97094 A  (Matsushita Electric Works,<br>Ltd.),<br>14 April 2005 (14.04.2005),<br>claims<br>& US 2005/0079971 A1     & EP 1508554 A2<br>& KR 10-2005-0020706 A   & CN 1607196 A | 1-18 |
| A | JP 2005-306726 A  (Matsushita Electric Works,<br>Ltd.),<br>04 November 2005 (04.11.2005),<br>claims<br>& US 2005/0272591 A1     & EP 1580178 A1<br>& KR 10-2006-0044643 A   & CN 1673184 A | 1-18 |

Form PCT/ISA/210 (continuation of second sheet) (July 2009)

**EP 2 520 555 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5246760 B
- JP H8268775 B
- JP 2707528 B
- WO 0211780 A